Europäisches Patentamt

European Patent Office

Office européen des brevets

(11) Numéro de publication: **0 218 507**
**A1**

# DEMANDE DE BREVET EUROPEEN

(21) Numéro de dépôt: **86402016.9**

(22) Date de dépôt: **15.09.86**

(51) Int. Cl.⁴: **G 21 F 7/04**
**G 05 D 16/20, B 01 L 1/02**

(30) Priorité: **19.09.85 FR 8513890**

(43) Date de publication de la demande:
**15.04.87 Bulletin 87/16**

(84) Etats contractants désignés:
**BE CH DE GB IT LI**

(71) Demandeur: **COMMISSARIAT A L'ENERGIE ATOMIQUE
Etablissement de Caractère Scientifique Technique et
Industriel
31/33, rue de la Fédération
F-75015 Paris (FR)**

(72) Inventeur: **Couleaud, Jean
53, Cité Georges Lanson
F-91220 Bretigny Sur Orge (FR)**

**Caian, Claude
5, Avenue Georges Clémenceau
F-94480 Ablon Sur Seine (FR)**

(74) Mandataire: **Mongrédien, André et al
c/o BREVATOME 25, rue de Ponthieu
F-75008 Paris (FR)**

(54) **Système de contrôle et de surveillance d'une boîte à gants.**

(57) L'invention concerne un système de contrôle et de surveillance d'une boîte à gants.

Ce système (1) comprend des premier et second moyens de détection (4, 5) de seuils de régulation de pression dans la boîte, des premier et second moyens de détection (6, 7) de seuils d'alarme de pression dans la boîte, des vannes d'admission et d'extraction (2, 3) d'un gaz dans la boîte, ainsi que des moyens de contrôle de ces vannes. Les moyens de détection de seuils de régulation et d'alarme et les moyens de contrôle sont de type pneumatique : les vannes sont à commande pneumatique.

Application au contrôle du fonctionnement de boîte à gants.

FIG 1A

FIG 1B

EP 0 218 507 A1

**Description**

Système de contrôle et de surveillance d'une boîte à gants

La présente invention concerne un système de contrôle et de surveillance d'une boîte à gants. Elle s'applique notamment au contrôle de la pression régnant dans cette boîte à gants, du fonctionnement de cette boîte. ainsi qu'à la détection de la présence éventuelle d'un liquide sur le plancher de cette boîte. Elle s'applique plus particulièrement aux boîtes à gants fonctionnant sous dépression.

On sait qu'une boîte à gants est une enceinte dans laquelle il est possible de manipuler des produits contaminés par exemple ; un gaz approprié est introduit l'intérieur de cette enceinte, la pression obtenue étant inférieure à la pression de l'atmosphère à l'extérieur de l'enceinte. Le maintien de la dépression à l'intérieur d'une boîte à gants est absolument nécessaire à la sécurité du personnel qui manipule les produits contaminés situés à l'intérieur de cette boîte. Le gaz introduit dans la boîte est généralement un gaz neutre ; la pression interne doit être régulée. par exemple entre un premier et un deuxième seuil de régulation de pression. le premier seuil ayant une valeur supérieure à celle du deuxième seuil. Généralement deux seuils d'alarme sont prévus : un premier seuil d'alarme de pression haute dont la valeur est supérieure à la valeur du premier seuil de régulation et un deuxième seuils d'alarme de pression basse dont la valeur est inférieure à la valeur du deuxième seuil de régulation. Une alarme est déclenchée à chaque fois que la pression à l'intérieur de la boîte à gants égale la valeur du premier seuil d'alarme, ou devient égale à la valeur du deuxième seuil d'alarme.

Il est connu de contrôler et de surveiller une boîte à gants par un système qui est relié à au moins une vanne d'admission et une vanne d'extraction de gaz dans cette boîte. Ce système comprend un premier et un deuxième moyens de détection des premier et deuxième seuils de régulation de pression dans la boîte et un premier et un deuxième moyens de détection de seuils d'alarme de pression haute et de pression basse dans cette boîte. Ce système comprend aussi un ensemble de contrôle relié à l'ensemble des moyens de détection de seuils de régulation et d'alarme, ainsi qu'aux vannes d'admission et d'extraction. pour réguler la pression dans la boîte à gants. entre les premier et deuxième seuils de régulation. Dans l'état de la technique. les moyens de détection de seuils sont généralement des transducteurs électriques et l'ensemble de contrôle qui est relié à ces moyens de détection de seuils et qui commande les vannes est de type électrique ou électronique. Lorsque l'ambiance extérieure à la boîte à gants présente des risques d'explosion (hydrogène par exemple). sous l'effet d'une étincelle. la boîte à gants peut être détruite et il est évident que le personnel qui utilise cette boîte à gants court des dangers très sérieux. L'utilisation de moyens de détection de seuils et d'un ensemble de contrôle de type électrique ou électronique est donc à proscrire ou à adapter.

On sait également qu'il est nécessaire de surveiller le niveau d'un liquide qui peut accidentellement se déverser sur le plancher d'une boîte à gants, par suite des manipulations effectuées dans celle-ci : cette fuite doit être détectée le plus tôt possible, en raison des risques de contamination. Il est donc connu d'utiliser un détecteur de niveau qui est lui aussi généralement de type électrique et qui commande une vanne de sectionnement sur l'arrivée d'eau.

L'invention a pour but de remédier aux inconvénients des systèmes de contrôle et de surveillance de boîtes à gants de type connu et notamment de réaliser un système pneumatique pour détecter des seuils de pression de régulation déterminant l'ouverture ou la fermeture des vannes d'admission ou d'extraction du gaz, pour détecter des seuils d'alarme ou pour déclencher des alarmes, et pour détecter un seuil de niveau de liquide sur le plancher de la boîte, ce système :

- évite l'arrêt de l'installation en cas de disparition de l'énergie électrique,
- supprime les parasites d'origine électrique,
- diminue le risque électrique (sécurité des travailleurs),
- accroît la fiabilité : moins d'usure par commutation pneumatique que par rupture électrique,
- délivre. pour chaque seuil de détection, un signal de commande sur chaque vanne au lieu d'un seul dans les systèmes connus : sécurité de fonctionnement augmentée,
- assure une détection précoce de la présence d'eau dans la boîte à gants.

L'invention a pour objet un système de contrôle et de surveillance d'une boîte à gants, ce système étant relié à au moins une vanne d'admission et une vanne d'extraction d'un gaz dans la boîte à gants et comprenant un premier et un deuxième moyens de détection d'un premier et d'un deuxième seuils de régulation de pression dans la boîte, le premier seuil de régulation ayant une valeur supérieure à celle du deuxième seuil de régulation, un premier moyen de détection de seuils d'alarme de pression haute dans la boîte et un deuxième moyen de détection de seuils d'alarme de pression basse dans la boîte, la valeur du premier seuil d'alarme étant supérieure à celle du premier seuil de régulation, la valeur du deuxième seuil d'alarme étant inférieure à celle du deuxième seuil de régulation, un premier et un deuxième moyens d'alarme de pression haute ou basse respectivement reliés aux premier et deuxième moyens de détection de seuils d'alarme pour être déclenchés lorsque la pression dans la boîte est égale ou supérieure au premier seuil d'alarme ou égale ou inférieure au deuxième seuil d'alarme. et un ensemble de contrôle relié aux premier et deuxième moyens de détection de seuils de régulation. aux premier et deuxième moyens de détection de seuils d'alarme et aux vannes d'admission et d'extraction pour réguler la pression entre les premier et deuxième seuils de régulation, caractérisé en ce que les premier et deuxième moyens de détection de premier et deuxième seuils de régulation, les premier et deuxième moyens de détection de premier et deuxième seuils d'alarme, et l'ensemble de contrôle sont de type pneumatique et sont alimentés par un gaz comprimé, les vannes d'admission et d'extraction étant des vannes à commande pneumatique.

Selon une autre caractéristique, l'ensemble de contrôle comprend un circuit logique pneumatique relié aux premier et deuxième moyens de détection de seuils de régulation, aux premier et deuxième moyens de détection de seuils d'alarme et aux vannes d'admission et d'extraction, et des moyens de sélection de mode de fonctionnement reliés au circuit logique et comportant un premier moyen de sélection pour que le circuit logique commande un fonctionnement dit de régulation pour lequel les vannes d'admission et d'extraction sont fermées en permanence lorsque la pression dans la boîte est comprise entre les premier et deuxième seuils de régulation, un deuxième moyen de sélection pour que le circuit logique commande un fonctionnement dit de balayage pour lequel les vannes d'admission et d'extraction sont ouvertes en permanence lorsque la pression dans la boîte est comprise entre les premier et deuxième seuils de régulation.

Selon une autre caractéristique, l'ensemble de contrôle est un ensemble logique pneumatique commandant l'ouverture de la vanne d'extraction ou la fermeture de la vanne d'admission, lorsque la pression dans la boîte est égale ou supérieure au premier seuil de régulation, ou commandant l'ouverture de la vanne d'admission ou la fermeture de la vanne d'extraction lorsque la pression dans la boîte est égale ou inférieure au deuxième seuil de régulation, suivant le mode de fonctionnement.

Selon une autre caractéristique, les moyens de sélection de mode de fonctionnement comprennent un troisième moyen de sélection pour que le circuit logique commande un mode de fonctionnement dit d'attente, pour lequel il y a fermeture permanente des vannes d'admission et d'extraction lorsque la pression dans la boîte est comprise entre les seuils de régulation ou a une valeur supérieure au premier seuil ou inférieure au deuxième seuil, seules les alarmes haute ou basse étant déclenchées lorsque la pression dans la boîte devient supérieure au premier seuil d'alarme ou inférieure au deuxième seuil d'alarme. Dans ce mode de fonctionnement, la boîte est alimentée par l'air ambiant extérieur, par un circuit indépendant.

Selon une autre caractéristique, les premier, deuxième et troisième moyens de sélection sont des vannes pneumatiques commandant l'alimentation du circuit logique de commande.

Selon une autre caractéristique, le deuxième moyen de sélection comprend en outre un détecteur de seuil d'hygrométrie relié au circuit logique pour que la sélection du mode de fonctionnement dit de balayage s'opère soit par ouverture de la vanne du deuxième moyen de sélection, soit par suite d'un dépassement de seuil d'hygrométrie.

Selon une autre caractéristique, le système de contrôle et de surveillance comprend en outre un moyen pneumatique de détection de seuil de niveau de liquide dans la boîte, ce moyen de détection de seuil de niveau étant alimenté par ledit gaz comprimé, et une alarme de niveau reliée au moyen de détection de seuil de niveau pour être déclenchée lorsque le niveau du liquide dans la boîte dépasse le seuil de niveau.

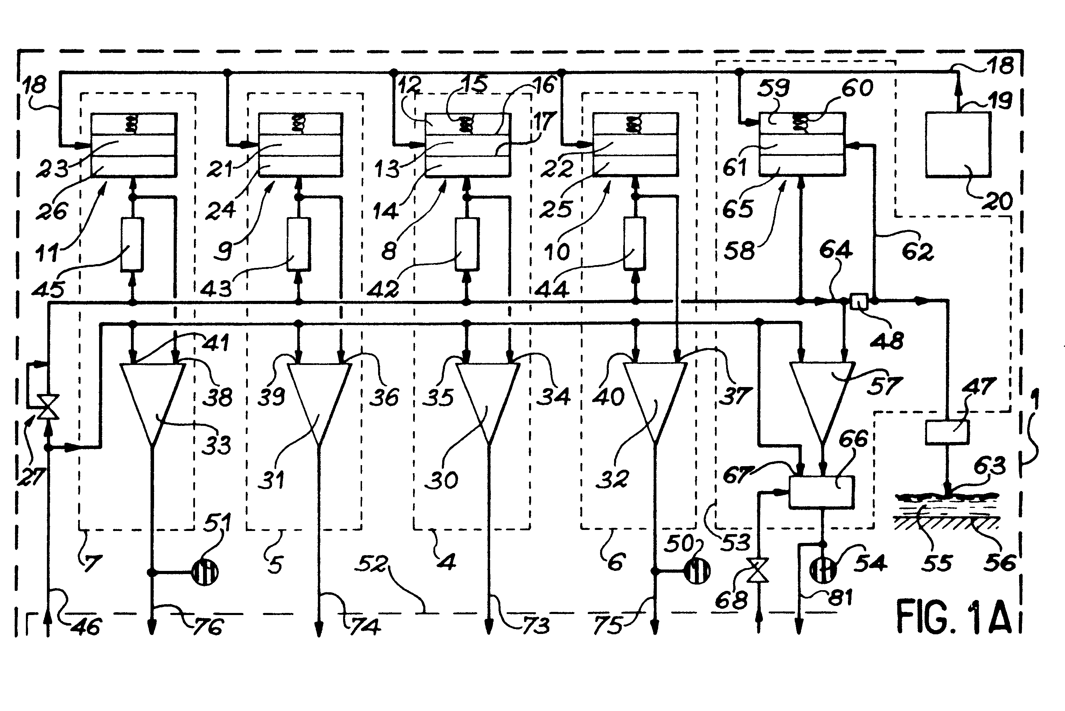

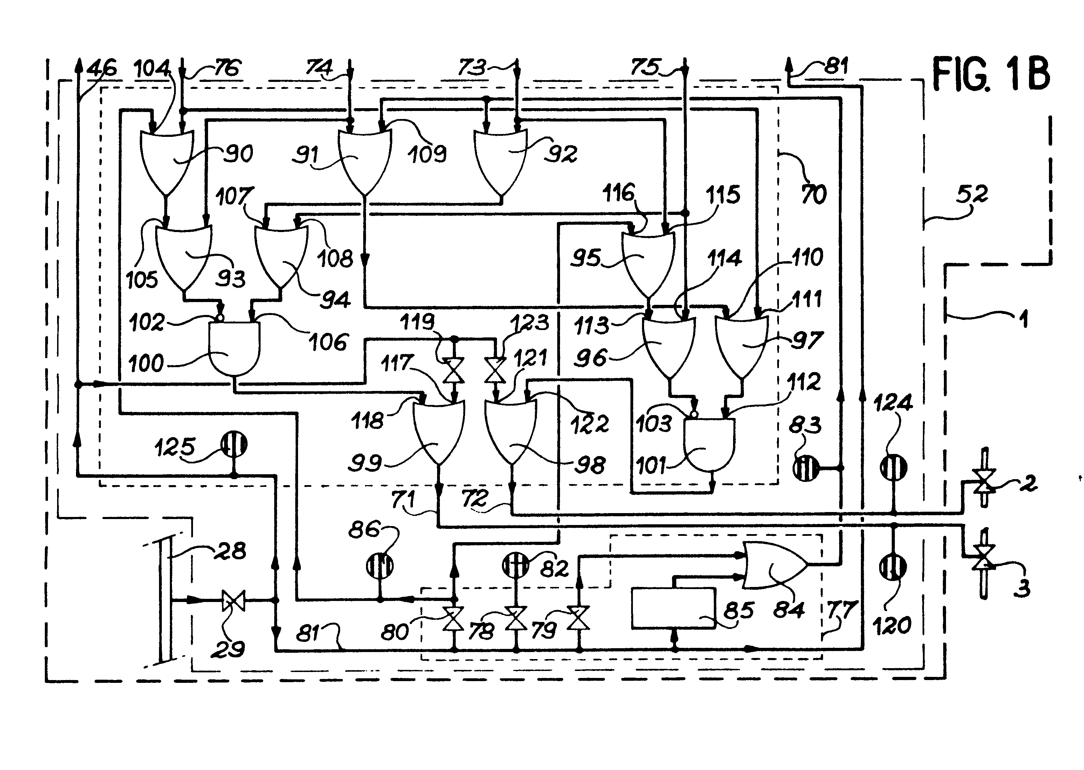

Les caractéristiques et avantages de l'invention ressortiront mieux de la description qui va suivre, donnée en référence aux figures 1A et 1B annexées, qui représentent schématiquement un système de contrôle et de surveillance de boîte à gants, conforme à l'invention.

Le système de contrôle et de surveillance conforme à l'invention est représenté schématiquement en 1 sur la figure. Ce système est relié à au moins une vanne d'admission 2 et une vanne d'extraction 3 d'un gaz dans la boîte à gants (la boîte à gants n'est pas représentée sur la figure). Le système comprend un premier moyen de détection 4 d'un premier seuil de régulation de pression dans la boîte. Il comprend aussi un deuxième moyen de détection 5 d'un deuxième seuil de régulation de pression dans la boîte. Le premier seuil de régulation a une valeur supérieure à celle du deuxième seuil. Dans le cas d'une boîte à gants fonctionnant sous dépression, la valeur du premier seuil de régulation peut être voisine de -30 décapascal (DPA), tandis que la valeur du deuxième seuil de régulation peut être voisine de -50 DPA.

Le système comporte aussi un premier moyen de détection 6 d'un seuil d'alarme de pression haute dans la boîte et un deuxième moyen de détection 7 d'un seuil d'alarme de pression basse dans la boîte. La valeur du premier seuil d'alarme est supérieure à celle du premier seuil de régulation, tandis que la valeur du deuxième seuil d'alarme est inférieure à celle du deuxième seuil de régulation. Le premier seuil d'alarme peut avoir une valeur voisine de -5 DPA, tandis que le deuxième seuil d'alarme peut avoir une valeur voisine de -110 DPA. Les moyens de détection de seuils d'alarme permettent, comme on le verra plus loin en détail, de déclencher une alarme dite haute, lorsque la pression du gaz dans la boîte est égale ou supérieure à la valeur du premier seuil d'alarme fixé par les moyens de détection 6, ou de déclencher une alarme dite basse, lorsque la pression dans la boîte est égale ou inférieure à la valeur du deuxième seuil d'alarme fixé par les moyens de détection 7.

Les moyens de détection de seuils de pression de régulation ou de seuils de pression d'alarme 4, 5, 6, 7 comprennent respectivement des capteurs de pression 8, 9, 10, 11 connus dans l'état de la technique. Chaque capteur tel que le capteur 8 par exemple, comprend trois chambres séparées 12, 13, 14. La chambre 12 est une chambre à l'intérieur de laquelle la pression est voisine de la pression atmosphérique. Cette chambre est munie d'un ressort de réglage 15 du seuil de pression que l'on souhaite détecter. Les trois chambres sont séparées par des membranes 16, 17 et la chambre intermédiaire telle que 13 est reliée à un conduit 18 dont une extrémité 19 communique avec un filtre 20 ouvert sur la boîte à gants. Il en résulte que chacune des chambres intermédiaires 13, 21, 22, 23 reçoit le gaz contenu dans la boîte à gants et est soumise à la pression que présente ce gaz dans la boîte à gants. Les chambres inférieures 14, 24, 25, 26 sont alimentées par un gaz comprimé tel que l'air comprimé par exemple ou par le gaz introduit dans la boîte, fourni à la sortie d'un détendeur 27 alimenté par un réseau approprié 28. Ce réseau alimente d'ailleurs tout le système en gaz comprimé, comme on le verra plus loin en détail. On a représenté, en exemple, une vanne 29 de commande de marche-arrêt du système : cette vanne permet de mettre le système en fonctionnement (vanne 29 ouverte) ou de l'arrêter (vanne 29 fermée).

Les moyens de détection de pressions 4, 5, 6, 7, comprennent aussi, respectivement, des amplificateurs pneumatiques 30, 31, 32, 33. Chaque amplificateur comprend deux entrées. L'une des entrées est reliée à la sortie de la chambre inférieure du capteur pneumatique correspondant, tandis que l'autre entrée est reliée à la source d'air comprimé et constitue l'entrée d'alimentation nécessaire au fonctionnement de cet amplificateur. C'est ainsi par exemple, que l'entrée 34 de l'amplificateur 30 est reliée à la sortie de la chambre inférieure 14 du capteur 8, et que l'entrée 35 de cet amplificateur est reliée au conduit 46 alimenté par la source d'air comprimé 28 à travers la vanne 29. Un indicateur visuel 125 relié au conduit 46 indique l'ouverture ou la fermeture de la vanne 29, et donc la marche ou l'arrêt du système. De la même manière, les entrées 36, 37, 38 des amplificateurs 31, 32, 33 sont respectivement connectées aux sorties des chambres inférieures 24, 25, 26 des capteurs correspondants. Elles sont alimentées ensemble en gaz comprimé, par la sortie du détendeur 27, par l'intermédiaire d'un limiteur de débit. Les entrées 39, 40. 41 sont reliées au conduit 46. Les limiteurs de débit sont représentés en 42, 43, 44, 45 sur la figure. Ils permettent notamment d'assurer le fonctionnement de l'amplificateur pneumatique correspondant sans perturber l'équilibre des autres capteurs lorsque le seuil de pression fixé par le ressort du capteur correspondant est atteint mettant à la purge l'entrée de l'amplificateur et la sortie du capteur. C'est ainsi par exemple que l'amplificateur 30, relié au capteur 8, fournit sur sa sortie un signal "pneumatique" dont l'état logique passe de 0 à 1 lorsque la pression à l'intérieur de la chambre intermédiaire 13 du capteur 8 devient égale ou supérieure au seuil de pression fixé par le ressort 15 de la chambre supérieure 12 (seuil supérieur à -30 DPA dans l'exemple considéré). Dans l'exemple de réalisation considéré, de la même manière, le niveau logique du signal de sortie de l'amplificateur 31 passe de 0 à 1 lorsque la pression devient égale ou inférieure à -50 DPA. Le signal à la sortie de l'amplificateur 32 passe de l'état logique 0 à l'état logique 1 lorsque la pression devient égale ou supérieure à -5 DPA. Enfin, le signal à la sortie de l'amplificateur 33 passe de l'état logique 0 à l'état logique 1 lorsque la pression devient égale à -110 DPA. Les moyens 6. 7 de détection de seuils d'alarme permettent d'ailleurs de déclencher respectivement des alarmes 50, 51 de pressions haute ou basse. Ces alarmes 50, 51 sont par exemple des alarmes visuelles à déclenchement pneumatique avec fourniture d'un contact pour report à distance. L'alarme 50 est une alarme de pression haute indiquant que la pression dans la boîte dépasse le seuil de -5 DPA ; l'alarme 51 est une alarme de pression basse indiquant que la pression dans la boîte devient inférieure à -110 DPA.

Le système 1 comprend aussi un ensemble de contrôle 52 qui est relié aux premier et deuxième moyens 4, 5 de détection de seuils de régulation, aux premier et deuxième moyens 6, 7 de détection de seuils d'alarme, ainsi qu'aux vannes d'admission 2. d'extraction 3 : cet ensemble de contrôle permet notamment de réguler la pression du gaz dans la boîte entre les premier et deuxième seuils de régulation fixés par les moyens de détection 4, 5. Cet ensemble est de type "logique pneumatique " ; il est alimenté par le gaz comprimé fourni par le réseau 28 (air comprimé par exemple ou gaz distribué dans la boîte).

Enfin, le système comprend un moyen pneumatique 53 de détection de seuil de niveau de liquide dans la boîte. Ce moyen est lui aussi alimenté par le gaz comprimé fourni par le réseau 28. Il permet de déclencher une alarme 54 lorsqu'un liquide 55. éventuellement présent sur le plancher 56 de la boîte à gants, dépasse un seuil prédéterminé de niveau. Ce liquide peut par exemple provenir de récipients utilisés dans des manipulations effectuées à l'intérieur de la boîte ou de fuites de réseaux internes de réfrigération. Les moyens de détection de seuil de niveau comprennent un amplificateur pneumatique 57 alimenté sur une entrée par le gaz comprimé fourni par le conduit 46. Une autre entrée de cet amplificateur est reliée à la sortie d'un capteur pneumatique de pression 58, cet ensemble étant alimenté en gaz comprimé par la sortie du détendeur 27. La chambre supérieure 59 de ce capteur contient un ressort 60 de réglage de seuil de pression ; cette chambre est reliée à la sortie 19 du filtre 20 pour recevoir le gaz contenu dans la boîte, ce gaz ayant une pression égale à celle qui règne dans la boîte. La chambre intermédiaire 61 du capteur 58 est reliée par un conduit 62 à une buse 63 perpendiculaire au plancher 56 de la boîte, par l'intermédiaire d'un filtre 47. L'extrémité de cette buse est située par rapport au plancher 56, à un niveau réglable qui est le niveau maximum admissible de liquide sur ce plancher. Cette buse est également reliée par un conduit 64 et par un élément 48 de réglage de débit, à la sortie de la chambre inférieure 65 du capteur 58. La sortie de l'amplificateur pneumatique 57 est reliée à une entrée d'un moyen de commande pneumatique 66 de l'alarme 54. Ce moyen de commande est alimenté en gaz comprimé, par une entrée 67. L'alarme 54 est par exemple une alarme de type visuel, à déclenchement pneumatique avec fourniture d'un contact pour report à distance. Cette alarme est déclenchée lorsqu'un seuil de pression détecté par le capteur 58 est franchi. Ce seuil de pression est franchi quand le liquide 55 sur le plancher 56 de la boîte atteint le niveau de l'extrémité de la buse 63 et modifie ainsi le régime des pressions dans le capteur 58. De la même manière que précédemment. le signal pneumatique à la sortie de l'amplificateur 57 passe de l'état logique 0 à l'état logique 1 et permet ainsi de déclencher l'alarme 54, par l'intérmédiaire du moyen de commande 66. Ce signal permet aussi de commander la fermeture éventuelle d'une vanne pneumatique du circuit de réfrigération (non représenté), par la sortie 81. Le moyen de commande 66 peut être relié au réseau 28 par une vanne pneumatique 68 qui est normalement fermée ; cette vanne peut être ouverte lorsque l'on souhaite par exemple interrompre l'alarme 54, lorsque celle-ci a été déclenchée.

L'ensemble de contrôle 52, de type logique pneumatique, commande l'ouverture de la vanne d'extraction 3 lorsque la pression dans la boîte devient égale au premier seuil de régulation détecté par le premier moyen de détection 4, la vanne d'admission étant contrôlée fermée ; au contraire, cet ensemble commande l'ouverture de la vanne d'admission 2 lorsque la pression dans la boîte est égale ou inférieure au deuxième seuil de régulation détecté par les moyens de détection 5, la vanne d'extraction 3 étant contrôlée en position fermée.

En fait, ce mode de fonctionnement est dit de "régulation" : les deux vannes 2, 3 d'admission et d'extraction sont fermées en permanence, lorsque la pression dans la boîte est comprise entre les premier et deuxième seuils de régulation (-30 DPA, -50 DPA). L'une ou l'autre des vannes 2, 3 est ouverte lorsque l'un des deux seuils de régulation est franchi.

L'ensemble de contrôle permet également de commander un mode de fonctionnement dit de "balayage" pour lequel, comme on le verra plus loin en détail, les vannes d'admission et d'extraction sont ouvertes en permanence, lorsque la pression dans la boîte est comprise entre les premier et deuxième seuils de régulation (-30 DPA, -50 DPA) détectés par les moyens de détection 4, 5.

L'ensemble de contrôle 52 permet enfin de commander un mode de fonctionnement dit "d'attente", qui sera décrit plus loin et pour lequel les vannes 2, 3 sont fermées en permanence, quelle que soit la pression dans la boîte.

Dans ce mode de fonctionnement, la pression dans la boîte est comprise entre les seuils de régulation ou présente des valeurs supérieure ou inférieure aux premier et deuxième seuils de régulation. Seules les alarmes haute 50 et basse 51 sont déclenchées lorsque la pression dans celle-ci devient supérieure au premier seuil ou inférieure au deuxième seuil.

L'ensemble de détection 52 comprend un circuit logique pneumatique 70 ayant deux sorties de commande 71, 72 respectivement reliées aux vannes d'admission et d'extraction 2, 3 à commande pneumatique. Des entrées 73, 74, 75, 76 de ce circuit logique sont respectivement reliées aux sorties des amplificateurs 30, 31, 32, 33 correspondants des moyens de détection de seuils 4, 5, 6, 7.

L'ensemble de contrôle 52 comprend aussi des moyens de sélection de mode de fonctionnement 77 pour que le circuit logique 70 commande un fonctionnement de "régulation", de "balayage", ou "d'attente", comme indiqué plus haut.

Les moyens de sélection de mode de fonctionnement comprennent notamment des vannes 78, 79, 80 de type pneumatique, qui commandent l'alimentation du circuit logique de commande 70.

La vanne 78 commande le mode de fonctionnement dit de régulation. Cette vanne est reliée par un conduit 81 et par la vanne 29 commandant la marche ou l'arrêt du système, à la sortie du réseau 28. Elle est aussi reliée à un indicateur visuel 82 à commande pneumatique, indiquant que l'opérateur a sélectionné le fonctionnement dit de régulation.

La vanne 79 permet de sélectionner le mode de fonctionnement dit de balayage. Cette vanne est elle aussi reliée au conduit d'alimentation 81 ainsi qu'à un indicateur visuel 83, à commande pneumatique, indiquant la sélection du mode de fonctionnement dit de balayage. Une porte pneumatique de type OU relie également cette vanne au circuit logique 70. La vanne 80 permet de sélectionner le mode de fonctionnement dit "d'attente". Cette vanne est reliée au conduit d'alimentation 81, ainsi qu'à un indicateur visuel 86 indiquant la sélection de ce mode de fonctionnement. Les vannes 78, 79, 80 constituent respectivement des premier, deuxième et troisième moyens de sélection de mode de fonctionnement. Elles constituent en fait un commutateur à trois voies pour éviter toute interférence d'un mode de fonctionnement sur un autre. Le deuxième moyen de sélection comprend aussi un détecteur de seuil d'hygrométrie associé à la cellule 85 alimentée par le conduit 81 ; la sortie de cette cellule est reliée au circuit logique 70, par l'intermédiaire de la porte OU 84. La sélection du mode de fonctionnement dit de "balayage" s'opère, comme on le verra plus loin en détail, soit par action de la vanne 79, soit par action du détecteur de seuil d'hygrométrie.

Le circuit logique 70 comprend des portes logiques de type pneumatique. Il comprend des portes de type OU, représentées en 90, 91, 92,... 98, 99, ainsi que deux portes pneumatiques de type NON, représentées en 100, 101. L'entrée 76 de la porte 90 est reliée à la sortie de l'amplificateur 33 ; l'autre entrée 104 de cette porte est reliée à la sortie de la vanne 80 du troisième moyen de sélection qui commande la fermeture permanente des vannes d'admission et d'extraction 2, 3 comme on le verra plus loin en détail. La sortie de la porte 90 est reliée à une entrée 105 de la porte 93, tandis que l'entrée 74 de la porte 93 est reliée à l'amplificateur 31. La sortie de la porte 93 est reliée à l'entrée 102 de la porte NON 100. L'autre entrée 106 de la porte 100 est reliée à la sortie de la porte OU 94. La porte 94 comporte deux entrées 107, 108 qui sont reliées respectivement à la sortie de la porte 92 et à la sortie de l'amplificateur 32. La porte 91 comporte elle aussi deux entrées 74, 109 qui sont respectivement reliées à la sortie de l'amplificateur 31 et à la sortie de la porte OU 84. La sortie de la porte 91 est reliée à une entrée 110 de la porte OU 97.

Une autre entrée 111 de la porte 97 est reliée à la sortie de l'amplificateur 33. La sortie de cette porte est reliée à l'autre entrée 112 de la porte NON 101. L'entrée 103 de la porte 101 est reliée à la sortie de la porte OU 96. Cette porte comporte deux entrées 113, 114 qui sont respectivement reliées à la sortie de la porte 95 et à la sortie de l'amplificateur 32. La porte OU 95 comporte elle aussi deux entrées 115, 116 qui sont respectivement reliées aux sorties de l'amplificateur 30 et à la sortie de la vanne 80 du troisième moyen de sélection. La porte OU 98 comporte deux entrées 122, 121 qui sont respectivement reliées à la sortie de la porte NON 101 et à la sortie d'une vanne 123 dont le rôle sera décrit plus loin en détail. Une entrée de cette vanne est reliée au conduit d'alimentation 46. La sortie 72 de la porte OU 98 commande, comme on le verra plus loin en détail, l'ouverture ou la fermeture de la vanne d'admission de gaz 2. Cette sortie peut éventuellement être reliée à un indicateur visuel 124, à commande pneumatique, qui permet de repérer l'ouverture de la vanne d'admission 2.

La porte OU 99 comporte deux entrées 118, 117 qui sont respectivement reliées à la sortie de la porte NON 100 et à la sortie d'une vanne 119. Une entrée de cette vanne est reliée au conduit d'alimentation 46. La sortie 71 de la porte 99 commande l'ouverture ou la fermeture de la vanne d'extraction 3. Cette sortie peut éventuellement être reliée à un indicateur visuel 120, à commande pneumatique, indiquant par exemple l'ouverture de la vanne 3. Un indicateur visuel 86 indique également l'ouverture ou la fermeture de la vanne 80 qui permet de sélectionner un mode de fonctionnement dit "d'attente" (les vannes d'admission et d'extraction 2, 3 sont en permanence en position fermée).

Le fonctionnement du système qui vient d'être décrit va maintenant être expliqué de manière plus détaillée. Comme indiqué plus haut, le système peut fonctionner selon trois modes différents : un mode dit de régulation commandé par l'ouverture de la vanne 78, les vannes 2, 3 d'admission et d'extraction étant en position fermée lorsque la pression à l'intérieur de la boîte est située entre les deux seuils de régulation déterminés par les moyens de détection 4, 5. Un mode dit de balayage commandé par l'ouverture de la vanne 79, les vannes 2, 3 étant normalement en position ouverte lorsque la pression à l'intérieur de la boîte est située entre les deux seuils de régulation déterminés par les moyens 4, 5. Un mode dit d'attente commandé par l'ouverture de la vanne 80, les vannes d'admission et d'extraction 2, 3 étant constamment fermées, quelle que soit la pression à l'intérieur de la boîte. L'ouverture de la vanne d'admission 2 ou de la vanne d'extraction 3 est commandée par un signal pneumatique d'état logique 1, alors que la fermeture de l'une de ces vannes est commandée par l'application sur son entrée de commande, d'un signal pneumatique d'état logique 0.

Lorsque le système fonctionne en mode dit de régulation, la vanne 78 est ouverte et lorsque aucun seuil de pression n'est dépassé, les signaux pneumatiques de sortie des amplificateurs 30, 31, 32, 33 sont à l'état logique 0. Les entrées de la porte OU 90 sont à l'état logique 0 et il en est de même pour les entrées des portes 91, 92, 93, 94, 95, 96, 97. Il en résulte que les sorties des portes NON 100, 101, fournissent un signal pneumatique d'état logique 0 ; les signaux pneumatiques produits sur les sorties 71, 72 des portes de commande 99, 98 sont à l'état logique 0, ce qui correspond à la fermeture des vannes 2, 3. Lorsque la pression dans la boîte devient par exemple égale ou inférieure au deuxième seuil de pression détecté par les moyens 5 (pression inférieure à -50 DPA), la sortie de l'amplificateur 31 passe au niveau logique 1. Cet état logique est transmis à la porte 91 et il en résulte que la sortie 71 de la porte 99 reste à l'état logique 0, correspondant au maintien de la fermeture de la vanne d'extraction 3. Au contraire, le signal à la sortie de la porte NON 101 passe à l'état logique 1. Il en résulte que le signal à la sortie de la porte de commande 98 passe luimême à l'état logique 1, correspondant à l'ouverture de la vanne d'admission 2. Si au contraire, le premier seuil de régulation détecté par les moyens 4 est dépassé (pression supérieure à -30 DPA par exemple) le signal pneumatique à la sortie de l'amplificateur 30 passe à l'état logique 1, il est facile d'en déduire que le signal fourni sur la sortie de la porte de commande 99 passe à l'état logique 1, correspondant à l'ouverture de la vanne d'extraction 3, alors que le signal à la sortie de la porte de commande 98 reste à l'état logique 0, correspondant au maintien de la fermeture de la vanne d'admission 2.

Dans le mode de fonctionnement dit de balayage, la vanne de sélection 79 est ouverte alors que les vannes de sélection 78 et 80 sont fermées. L'ouverture de la vanne 79 provoque l'application d'un signal pneumatique d'un niveau logique 1 sur une entrée de la porte 84. Ce signal est appliqué sur l'une des entrées de chacune des portes 91, 92. Il en résulte qu'en l'absence du dépassement du seuil de régulation, les sorties des portes 91, 92 fournissent un signal pneumatique d'état logique 1. Il est facile d'en déduire que dans ces conditions, les sorties des portes 98, 99 fournissent des signaux pneumatiques d'état logique 1 correspondant au maintien de l'ouverture des vannes d'admission et d'extraction 2, 3. Lorsque la pression dans la boîte a une valeur comprise entre les premier et deuxième seuils détectés par les moyens 4, 5, les vannes 2, 3 restent donc normalement ouvertes. Si la pression devient égale au deuxième seuil de pression (inférieur à -50 DPA par exemple), le signal de sortie de l'amplificateur 31 passe à l'état logique 1. Cet état logique est transmis sur les entrées des portes correspondant à la sortie de cet amplificateur, et il est facile d'en déduire que la sortie de la porte 99 fournit un signal qui passe à l'état logique 0, correspondant à la fermeture de la vanne d'extraction 3 ; la sortie de la porte 98 reste à l'état logique 1 correspondant au maintien de l'ouverture de la vanne d'admission 2.

Au contraire, lorsque le premier seuil de pression détecté par les moyens 4 est égalé, (pression supérieure à -30 DPA) la sortie de l'amplificateur 30 passe à l'état logique 1 et il est facile d'en déduire que le signal pneumatique sur la sortie de la porte de commande 99 reste à l'état logique 1, correspondant au maintien de l'ouverture de la vanne d'extraction 3 ; le signal pneumatique à la sortie de la porte de commande 98, qui était à l'état logique 1, passe à l'état logique 0 correspondant à la fermeture de la vanne d'admission 2.

Il est évident qu'en régulation comme en balayage, les alarmes 50 et 51 sont respectivement déclenchées lorsque la pression dans la boîte devient égale au seuil d'alarme haute détecté par les moyens 6, ou lorsque la pression devient égale au seuil d'alarme basse détecté par les moyens 7.

Dans chacun de ces cas, les signaux logiques délivrés par les amplificateurs 32 et 33 constituent des signaux d'entrée des portes 90 et 97 et des portes 94 et 96 confirmant les ordres déjà délivrés par les moyens de détection 4 et 5 en balayage et en régulation avec une action équivalente sur les vannes 2 et 3. Un autre choix fonctionnel des alarmes haute et basse consiste à remplacer les portes OU 94 et 97 par des portes NON, ce choix se traduisant par la fermeture systématique des vannes 2 et 3 isolant ainsi la boîte lorsque l'un quelconque des seuils d'alarme est détecté, toutes les autres séquences décrites par ailleurs étant inchangées.

Le mode de fonctionnement dit d'attente correspond à l'ouverture de la vanne de sélection 80 et à la fermeture des vannes de sélection 78, 79. Un signal de niveau logique 1 est de ce fait appliqué en permanence sur l'entrée 104 de la porte 90 et sur l'entrée 116 de la porte 95. Il en résulte que les signaux pneumatiques sur les sorties des portes 98, 99 sont à l'état logique 0, en permanence, quel que soit l'état logique des signaux fournis par les amplificateurs des moyens de détection 4, 5, 6, 7. Seules les alarmes 50, 51 fonctionnent lorsqu'un seuil de pression haute ou de pression basse est dépassé. Ce mode de fonctionnement dit d'at tente correspond par exemple au cas où l'on souhaite introduire de l'air dans la boîte à gants par exemple pour les besoins de la manipulation en cours. L'air est indroduit dans la boîte par une vanne qui n'est pas représentée sur la figure.

La porte 84 comporte une entrée qui est reliée à une cellule 85 de seuil d'hygrométrie ; lorsque le degré d'hygrométrie dans la boîte dépasse un certain seuil, cette cellule fournit sur sa sortie un signal pneumatique de niveau logique 1 qui est appliqué sur une entrée de la porte 84. Ce signal produit le même effet que l'ouverture de la vanne de balayage 79 : les vannes d'admission et d'extraction 2, 3 sont ouvertes en permanence lorsque la pression à l'intérieur de la boîte a une valeur comprise entre les premier et deuxième seuils de détection, grâce à l'application simultanée de signaux de niveaux logique 1 sur les entrées de commande de ces vannes. Au contraire, si le premier seuil de régulation est dépassé (pression devenant supérieure à -30 DPA), la vanne d'admission 2 est fermée par l'application d'un signal de niveau logique 0 sur son entrée de commande, alors que la vanne d'extraction reste ouverte par l'application d'un signal de niveau logique 1 sur son entrée de commande. Au contraire lorsque le deuxième seuil de régulation est dépassé (pression à l'intérieur de la boîte devenant à -50 DPA), la vanne d'admission 2 est ouverte par l'application d'un signal de niveau logique 1 sur son entrée de commande, alors que la vanne d'extraction 3 est fermée par application d'un signal de niveau logique 0 sur son entrée de commande.

Les vannes 119, 123 qui sont reliées au conduit d'alimentation 36 et qui sont respectivement reliées aux entrées 117, 121 des portes 99, 98 permettent de commander par leur ouverture, l'ouverture des vannes d'extraction et d'admission 3, 2 quel que soit le mode de fonctionnement sélectionné par les moyens de sélection 77.

## Revendications

1. Système de contrôle et de surveillance d'une boîte à gants, ce système (1) étant relié à au moins une vanne d'admission (2) et une vanne d'extraction (3) d'un gaz dans la boîte à gants et comprenant un premier et un deuxième moyens de détection (4, 5) d'un premier et d'un deuxième seuils de régulation de pression dans la boîte, le premier seuil de régulation ayant une valeur supérieure à celle du deuxième seuil de régulation, un premier moyen (6) de détection de seuils d'alarme de pression haute dans la boîte et un deuxième moyen (7) de détection de seuils d'alarme de pression basse dans la boîte, la valeur du premier seuil d'alarme étant supérieure à celle du premier seuil de régulation, la valeur du deuxième seuil d'alarme étant inférieure à celle du deuxième seuil de régulation, un premier et un deuxième moyens (50, 51) d'alarme de pression haute ou basse respectivement reliés aux premier et deuxième moyens de détection (6, 7) de seuils d'alarme pour être déclenchés lorsque la pression dans la boîte est égale ou supérieure au premier seuil d'alarme ou égale ou inférieure au deuxième seuil d'alarme, et un ensemble de contrôle (52) relié aux premier et deuxième moyens de détection (4, 5) de seuils de régulation, aux premier et deuxième moyens de détection (6, 7) de seuils d'alarme et aux vannes d'admission et d'extraction (2, 3) pour réguler la pression entre les premier et deuxième seuils de régulation, caractérisé en ce que les premier et deuxième moyens de détection (4, 5) de premier et deuxième seuils de régulation, les premier et deuxième moyens de détection (6, 7) de premier et deuxième seuils d'alarme, et l'ensemble de contrôle (52) sont de type pneumatique et sont alimentés par un gaz comprimé, les vannes d'admission et d'extraction (2, 3) étant des vannes à commande pneumatique.

2. Système selon la revendication 2, caractérisé en ce que l'ensemble de contrôle (52) comprend un circuit logique pneumatique (70) relié aux premier et deuxième moyens (4, 5) de détection de seuils de régulation, aux premier et deuxième moyens (6, 7) de détection de seuils d'alarme et aux vannes d'admission et d'extraction (2, 3), et des moyens (77) de sélection de mode de fonctionnement reliés au circuit logique (70) et comportant un premier moyen de sélection (78) pour que le circuit logique commande un mode de fonctionnement dit de régulation pour lequel les vannes d'admission (2) et d'extraction (3) sont fermées en permanence lorsque la pression dans la boîte est comprise entre les premier et deuxième seuils de régulation, un deuxième moyen de sélection (79, 84) pour que le circuit logique (70) commande un autre mode de fonctionnement dit de balayage pour lequel les vannes d'admission (2) et d'extraction (3) sont ouvertes en permanence lorsque la pression dans la boîte est comprise entre les premier et deuxième seuils de régulation.

3. Système selon la revendication 1, caractérisé en ce que l'ensemble de contrôle (52) est un ensemble logique pneumatique commandant l'ouverture de la vanne d'extraction (3) ou la fermeture de la vanne d'admission (2), lorsque la pression dans la boîte est égale ou supérieure au premier seuil de régulation, ou commandant l'ouverture de la vanne d'admission (2) ou la fermeture de la vanne d'extraction (3) lorsque la pression dans la boîte est inférieure au deuxième seuil de régulation, selon l'un ou l'autre des modes de fonctionnement.

4. Système selon la revendication 3, caractérisé en ce que les moyens (77) de sélection de mode de fonctionnement comprennent un troisième moyen de sélection (80) pour que le circuit logique (70) commande un mode de fonctionnement dit d'attente, pour lequel il y a fermeture permanente des vannes d'admission et d'extraction (2, 3) lorsque la pression dans la boîte est comprise entre les seuils de régulation ou a une valeur supérieure au premier seuil ou inférieure au deuxième seuil, seules les alarmes haute ou basse (50, 51) étant déclenchées lorsque la pression dans la boîte devient supérieure au premier seuil d'alarme ou inférieure au deuxième seuil d'alarme, la boîte étant alimentée par de l'air ambiant par un circuit indépendant.

5. Système selon la revendication 4, caractérisé en ce que les premier, deuxième et troisième moyens de sélection (78, 79, 80) sont des vannes pneumatiques commandant l'alimentation du circuit logique de commande (70) et constituent un commutateur à trois voies.

6. Système selon la revendication 5, caractérisé en ce que le deuxième moyen de sélection (79, 84) comprend en outre un détecteur de seuils d'hygrométrie (85) relié au circuit logique (70) pour que la sélection du mode de fonctionnement dit de balayage s'opère soit par ouverture de la vanne (79) du deuxième moyen de sélection, soit par suite d'un dépassement de seuil d'hygrométrie.

7. Système selon l'une quelconque des revendications 1 à 6, caractérisé en ce qu'il comprend en outre un moyen pneumatique (53) de détection de seuils de niveau de liquide dans la boîte, ce moyen de détection de seuils de niveau étant alimenté par ledit gaz comprimé, et une alarme (54) de niveau reliée au moyen de détection de seuils de niveau (53) pour être déclenchée lorsque le niveau du liquide dans la boîte dépasse le seuil de niveau.

FIG. 1A

FIG. 1B

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | THE REVIEW OF SCIENTIFIC INSTRUMENTS, vol. 40, no. 3, mars 1969, pages 414-419, New York, US; J.G. PACK et al.: "A versatile, inert atmosphere vacuum glove box" <br> * Page 419: "B. Pressure control system"; figure 4 * | 1-7 | G 21 F    7/04 <br> G 05 D   16/20 <br> B 01 L    1/02 |
| Y | PROCEEDINGS OF THE 12TH CONFERENCE ON REMOTE SYSTEMS TECHNOLOGY, ANS, novembre 1964, pages 315-322, Hinsdale, Illinois, US; B.J. KOPROWSKI et al.: "A system for a nitrogen atmosphere in an alpha-gamma hot cell" <br> * Page 320, colonne 2, lignes 37-51 * | 1-7 | |
| Y | US-A-3 499 599  (J.L. MEININGER et al.) <br> * Abrégé * | 1-7 | |
| A | US-A-3 490 408  (M. MONGE et al.) <br> * Colonne 2, lignes 11-29,35-40 * | 1 | |

DOMAINES TECHNIQUES RECHERCHES (Int Cl 4)

G 05 D
G 21 F
F 15 C
B 25 J
B 01 L

--- -/-

Le present rapport de recherche a été établi pour toutes les revendications

| Lieu de la recherche | Date d'achèvement de la recherche | Examinateur |
|---|---|---|
| LA HAYE | 19-12-1986 | GALANTI M. |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | NUCLEAR ENGINEERING, vol. 7, no. 74, juillet 1962, pages 284-288, Londres, GB; P.A.F. WHITE et al.: "Inert atmospheres in nuclear energy" * Page 287, colonne 2, lignes 24-48 * | 1 | |
| | --- | | |
| A | FR-A-2 392 782 (ALKEM GmbH) * Revendications 1,4 * | 1 | |
| | --- | | |
| A | EP-A-0 091 759 (BRITISH NUCLEAR FUELS LTD.) * Page 2, ligne 21 - page 3, ligne 14 * | 1 | |
| | --- | | |
| A | US-A-3 703 192 (G.R. STAUDACHER et al.) * Abrégé * | 1 | DOMAINES TECHNIQUES RECHERCHES (Int. Cl.4) |
| | ----- | | |

Le present rapport de recherche a été etabli pour toutes les revendications

| Lieu de la recherche | Date d'achèvement de la recherche | Examinateur |
|---|---|---|
| LA HAYE | 19-12-1986 | GALANTI M. |